(19) Europäisches Patentamt
European Patent Office
Office européen des brevets

(11) **EP 4 394 613 A1**

(12) **EUROPEAN PATENT APPLICATION**
published in accordance with Art. 153(4) EPC

(43) Date of publication:
**03.07.2024 Bulletin 2024/27**

(21) Application number: **22869054.1**

(22) Date of filing: **02.09.2022**

(51) International Patent Classification (IPC):
**G06F 13/14** (2006.01)

(52) Cooperative Patent Classification (CPC):
**G06F 13/14**

(86) International application number:
**PCT/CN2022/116822**

(87) International publication number:
**WO 2023/040683 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2021 RU 2021127325**

(71) Applicant: **Huawei Technologies Co., Ltd.
Shenzhen, Guangdong 518129 (CN)**

(72) Inventors:
• **QU, Huichun**
  **Shenzhen, Guangdong 518129 (CN)**
• **LI, Junying**
  **Shenzhen, Guangdong 518129 (CN)**
• **GISSIN, Victor**
  **Shenzhen, Guangdong 518129 (CN)**
• **GUREVICH, Elena**
  **Shenzhen, Guangdong 518129 (CN)**
• **LU, Gang**
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54) **DATA TRANSMISSION METHOD AND INPUT/OUTPUT DEVICE**

(57)    A data transmission method and an input/output device are provided. The method is applied to a computing cluster. The computing cluster includes a plurality of computing devices. A first computing device and a second computing device are any two of the plurality of computing devices. The first computing device communicates with the second computing device through a first channel. A first I/O device is deployed in the first computing device. A second I/O device is deployed in the second computing device. The first I/O device obtains a to-be-processed request, stores the to-be-processed request according to a storage policy, and then sends the to-be-processed request to the second I/O device through the first channel. The storage policy indicates a manner of storing the to-be-processed request in the first I/O device. In the foregoing technical solution, the first I/O device may determine, according to the storage policy, how to store the to-be-processed request, so that storage space of the first I/O device can be used more properly.

FIG. 4

## Description

This application claims priority to Russian Federation Patent Application No. RU2021127325, filed with the Federal Service for Intellectual Property on September 17, 2021 and entitled "DATA TRANSMISSION METHOD AND INPUT/OUTPUT DEVICE", which is incorporated herein by reference in its entirety.

## TECHNICAL FIELD

This application relates to the field of communication technologies, and more specifically, to a data transmission method and an input/output device.

## BACKGROUND

Remote direct memory access (Remote Direct Memory Access, RDMA) is a technology to reduce a delay of data processing by a computing device in network transmission. The RDMA technology may be used to directly transmit data from memory of one computing device to another computing device without a need of access of a peer operating system. This can allow a high-throughput and low-latency network communication, and is especially suitable for widely application in a computing cluster.

The computing cluster usually includes more than two computing devices. A plurality of processes may be run on each computing device. It is assumed that the computing cluster includes $N_{node}$ computing devices, and each computing device has P processes (where $N_{node}$ is a positive integer greater than or equal to 2, and P is a positive integer greater than or equal to 1). To implement full mesh in the computing cluster, $(N_{node} - 1) \times P \times P$ queue pairs (queue pairs, QPs) need to be established in each computing device, and each queue pair has one send queue (send queue, SQ). This needs to occupy a large amount of memory. For example, assuming that the cluster includes 10 computing devices in total, memory usage of an input/output (input/output, I/O) device in each computing device reaches a terabyte (terabyte, TB) level.

## SUMMARY

This application provides a data transmission method and an input/output device, to support a larger-scale computing cluster.

According to a first aspect, this application provides a data transmission method, where the method is applied to a computing cluster. The computing cluster includes a plurality of computing devices. A first computing device and a second computing device are any two of the plurality of computing devices. The first computing device communicates with the second computing device through a first channel. A first I/O device is deployed in the first computing device. A second I/O device is deployed in the second computing device. The first I/O device obtains a to-be-processed request, stores the to-be-processed request according to a storage policy, and then sends the to-be-processed request to the second I/O device through the first channel. The storage policy indicates a manner of storing the to-be-processed request in the first I/O device.

In the foregoing technical solution, the first I/O device may determine, according to the storage policy, how to store the to-be-processed request, instead of directly storing the to-be-processed request to storage space of the first I/O device. This can use the storage space of the first I/O device more properly, so that the to-be-processed request that needs to be sent to another computing device in the computing cluster can be stored by using less storage space. In this way, when the storage space of the I/O device remains unchanged, the I/O device using the foregoing technical solution can communicate with more I/O devices, to support a larger-scale computing cluster and improve scalability of RDMA.

In a possible implementation, that the first I/O device stores the to-be-processed request according to a storage policy includes: The first I/O device determines an identifier of a destination computing device of the to-be-processed request. The first I/O device determines, based on the identifier of the destination computing device, a first shared send queue SSQ that stores the to-be-processed request. The first SSQ is used to store the to-be-processed request associated with the destination computing device.

According to the foregoing technical solution, the I/O device may allocate, based on a quantity of computing devices in the computing cluster, storage space of the SSQ that used to store the to-be-processed request.

For example, if the computing cluster includes N computing devices, the first I/O device may allocate N - 1 storage space. The N - 1 storage space is in one-to-one correspondence with N - 1 channels. The N - 1 channels are communication channels between the first computing device and N - 1 computing devices other than the first computing device in the N computing devices. Each storage space in the N - 1 storage space may be used to store $N_{cos}$ SSQs. $N_{cos}$ is a quantity of class of services supported by a first I/O. $N_{cos}$ is a positive integer greater than or equal to 1.

Generally, a value of $N_{cos}$ is not greater than 8. Therefore, the first I/O device needs to establish a maximum of $N_{cos} \times (N - 1)$ SSQs. Generally, a value of $N_{cos}$ is less than a quantity of processes run on the computing device. Therefore, in comparison with a conventional technology, when the storage space of the I/O device remains unchanged, the I/O device using the foregoing technical solution can communicate with more I/O devices, to support a larger-scale computing cluster and improve scalability of RDMA.

The foregoing case in which the N - 1 storage space is in one-to-one correspondence with the N - 1 channels may be referred to as static association. In a possible implementation of the first aspect, the SSQ in the first I/O device may be dynamically associated with the channel. Before the first I/O device determines, based on the identifier of the destination computing device, the first shared send queue SSQ that stores the to-be-processed request, the method further includes: The first I/O device creates a first SSQ set. The first SSQ set includes at least one SSQ, and the at least one SSQ includes the first SSQ. The first I/O device binds the first SSQ set to the first channel. The first SSQ set is used to store the to-be-processed request sent through the first channel.

In an implementation of dynamic management, the first I/O device may create an SSQ resource poor. A size of storage space occupied by the SSQ resource pool may be less than a size of the N - 1 storage space. Before the to-be-processed request sent through the first channel needs to be stored, the first I/O device may determine the first SSQ set from the SSQ resource pool, and bind the first SSQ set to the first channel. When there is no to-be-processed request that needs to be sent through the first channel, the first I/O device may unbind the first SSQ set from the first channel. In this way, the SSQ in the first SSQ set is reclaimed to the SSQ resource pool, so that the SSQ is used for a to-be-processed request sent through another channel. This can further reduce a size of storage space occupied by the SSQ, and further improve a scale of a supported computing cluster and the scalability of the RDMA.

In another possible implementation, when the first SSQ set includes a plurality of SSQs, the plurality of SSQs are in one-to-one correspondence with a plurality of class of services CoSs. A CoS corresponding to the first SSQ is the same as a CoS of the to-be-processed request.

The foregoing technical solution supports the CoS. Therefore, to-be-processed requests of different CoSs may be stored in corresponding SSQs.

In another possible implementation, when processing time of the to-be-processed request in the first SSQ exceeds a preset threshold, the to-be-processed request in the first SSQ is stored in a pending shared send queue PSSQ.

In the foregoing technical solution, a to-be-processed request blocking the SSQ may be transferred to the PSSQ. In this way, subsequent SSQs may be processed first. This can effectively reduce an occurrence probability of head-of-line blocking (head-of-line blocking).

In another possible implementation, that the first input/output I/O device obtains a to-be-processed request includes: The first I/O device obtains the to-be-processed request from a first submission queue. The first submission queue is used to store a to-be-processed request of a process associated with the first submission queue. The first submission queue is stored in memory of the first computing device.

In another possible implementation, the first I/O device includes at least one of a network interface controller, a smart network interface controller, a host bus adapter, a host channel adapter, an accelerator, a data processing unit, a graphics processing unit, an artificial intelligence device, and a software defined infrastructure.

According to a second aspect, this application further provides an I/O device. The I/O device includes a unit configured to implement any one of the first aspect or the possible implementations of the first aspect.

According to a third aspect, this application further provides a computer device. The computer device includes a processor. The processor is configured to be coupled to a storage, and read and execute instructions and/or program code in the storage, to perform any one of the first aspect or the possible implementations of the first aspect. Optionally, the storage may be further configured to store an SSQ.

According to a fourth aspect, this application further provides a chip system. The chip system includes a logic circuit. The logic circuit is configured to be coupled to an input/output interface, and transmit data through the input/output interface, to perform any one of the first aspect or the possible implementations of the first aspect.

According to a fifth aspect, this application further provides a computer-readable storage medium. The computer-readable storage medium stores program code. When the computer storage medium is run on a computer, the computer is enabled to perform any one of the first aspect or the possible implementations of the first aspect.

According to a sixth aspect, this application further provides a computer program product. The computer program product includes computer program code, and when the computer program code is run on a computer, the computer is enabled to perform any one of the first aspect or the possible implementations of the first aspect.

In this application, the implementations provided in the foregoing aspects may be further combined to provide more implementations.

## BRIEF DESCRIPTION OF DRAWINGS

FIG. 1 is a schematic diagram of a computing cluster;

FIG. 2 is a schematic flowchart of a computing device according to an embodiment of this application;

FIG. 3 is a schematic flowchart of a data transmission method according to an embodiment of this application;

FIG. 4 is a schematic flowchart of a data transmission method according to an embodiment of this application;

FIG. 5 is a schematic structural block diagram of an I/O device according to an embodiment of this application; and

FIG. 6 is a structural block diagram of an I/O device according to an embodiment of this application.

## DESCRIPTION OF EMBODIMENTS

The following describes technical solutions of this application with reference to accompanying drawings.

A chip in embodiments of this application may be a system on chip (system on chip, SoC), a central processing unit (central processing unit, CPU), a network processor (network processor, NP), a digital signal processing circuit (digital signal processor, DSP), an application processor (application processor, AP), or another integrated chip.

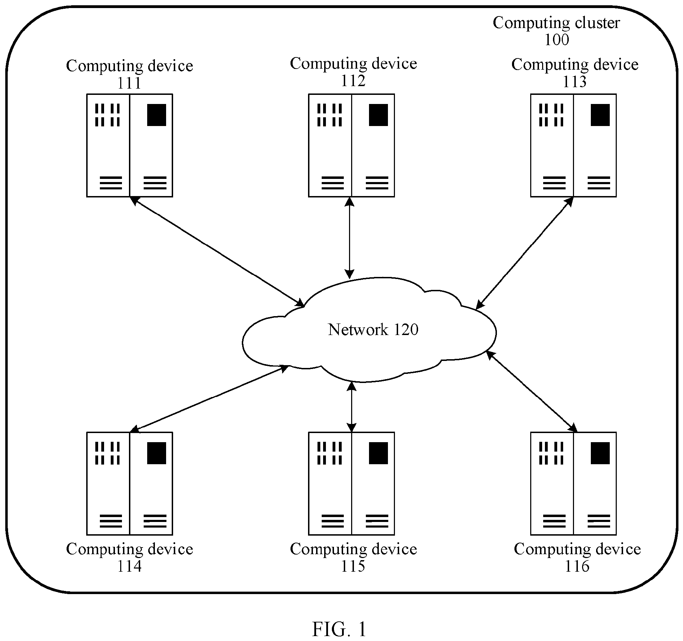

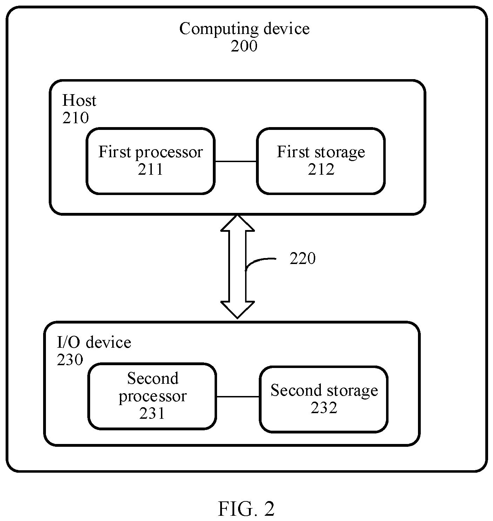

A computing cluster (which may be briefly referred to as a cluster) is a computing system. In the computing cluster, a group of computing devices are connected to highly collaboratively perform a computing task. A single computing device in the computing cluster may be referred to as a node. FIG. 1 is a schematic diagram of a computing cluster. As shown in FIG. 1, a computing cluster 100 includes six computing devices, which are respectively a computing device 111, a computing device 112, a computing device 113, a computing device 114, a computing device 115, and a computing device 116. The computing device 111 to the computing device 116 are connected via a network 120. The following describes the computing device shown in FIG. 1 with reference to FIG. 2. A computing device 200 shown in FIG. 2 may be any one of the computing device 111 to the computing device 116 that are shown in FIG. 1. The computing device 200 shown in FIG. 2 includes a host 210, an I/O interconnection channel 220, and an I/O device 230. The host 210 may be connected to the I/O device 230 through the I/O interconnection channel 220.

The host 210 may be an operation core and a control core, and is a final execution unit for information processing and program running. The host 210 includes a processor 211 and a first storage 222. The processor may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or may be any conventional processor or the like. The processor 211 may alternatively be a system on chip (system on chip, SoC) or an embedded processor. The processor 211 has functions such as processing instructions, performing an operation, and processing data. The first processor 211 may allocate independent storage resources to a plurality of processes, to run the plurality of processes. The first storage 222 may be implemented by a random access memory (random access memory, RAM) or another storage medium. The first storage 222 may be configured to store program code of the plurality of processes.

The I/O interconnection channel 220 is an interconnection mechanism between the host 210 and the I/O device 230, for example, a peripheral component interconnect express (peripheral component interconnect express, PCIe), a compute express link (compute express link, CXL), a cache coherent interconnect for accelerators (cache coherent interconnect for accelerators, CCIX), a unified bus (unified bus, UB or Ubus), and the like.

The I/O device 230 is hardware that can perform data transmission with the host 210, and is configured to receive and execute a to-be-processed request sent by the host 210. The I/O device 230 may be at least one of a network interface controller (network interface controller, NIC), a smart-NIC (smart-NIC), a host bus adapter (host bus adapter, HBA), a host channel adapter (host channel adapter, HCA), an accelerator (accelerator), a data processing unit (data processing unit, DPU), a graphics processing unit (graphics processing unit, GPU), an artificial intelligence (artificial intelligence, AI) device, a software defined infrastructure (software defined infrastructure, SDI), and the like. The I/O device 230 may include a second processor 231 and a second storage 232. The second storage 231 may be implemented by a random access memory (random access memory, RAM) or another storage medium.

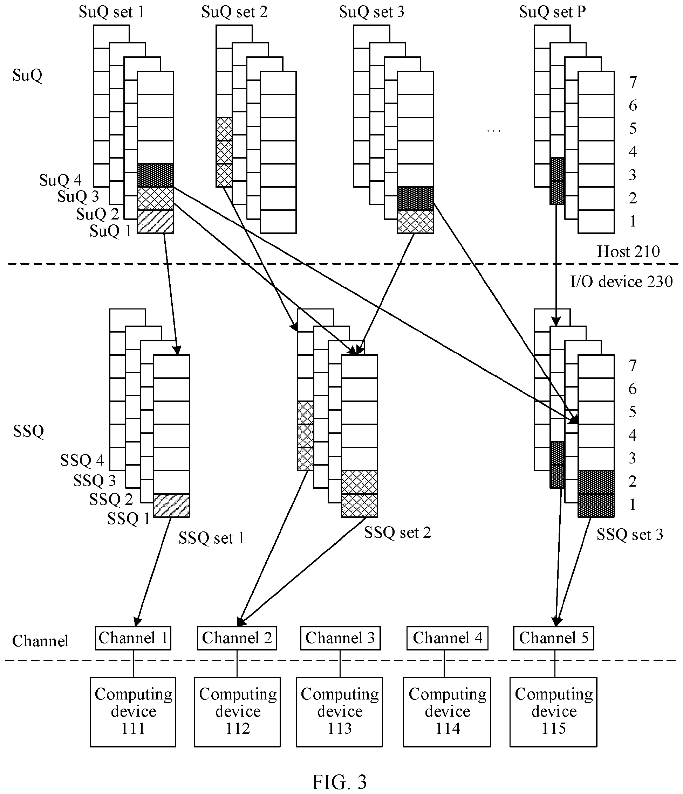

The following describes embodiments of this application with reference to FIG. 3. For ease of description, when the embodiment shown in FIG. 3 is described, it is assumed that the computing device 200 shown in FIG. 2 is the computing device 116 in a computing system 100 shown in FIG. 1. In addition, for ease of description, it is assumed below that there are P processes in the host 210, which are referred to as a process 1 to a process P respectively. As shown in FIG. 3, when there are the P processes in the host 210, the host 210 creates P submission queue (submission queue, SuQ or SQ) sets, which are referred to as an SuQ set 1 to an SuQ set P respectively. The P SuQ sets are associated with the P processes respectively. In other words, the SuQ set 1 is associated with the process 1, the SuQ set 2 is associated with the process 2, and the SuQ set 3 is associated with the process 3. The rest can be deduced by analogy. Each SuQ set in the P SuQ sets is used to store a to-be-processed request of a process associated with the SuQ. The to-be-processed request stored in the SuQ may be referred to as a submission queue element (submission queue element, SuQE).

For example, the process 1 creates a work request (work request, WR) 1. The WR 1 is converted into an SuQE and stored in the SuQ set 1.

In addition, as shown in FIG. 3, each SuQ set includes four SuQs. The four SuQs are in one-to-one correspondence with four class of services (Class of Services, CoSs). The CoS is allocated when the SuQE is created. When an SuQE is stored in an associated SuQ set, the SuQE may be stored in a corresponding SuQ based on a CoS of the SuQE. The WR 1 is still used as an example. Assuming that the WR 1 is converted into three SuQEs: an SuQE 1, an SuQE 2, and an SuQE 3, and CoSs of the SuQE 1 to the SuQE 3 are all 1, the SuQE 1 to the SuQE 3 may be stored in an SuQ 1 in the SuQ set 1.

Assuming that a work request (work request, WR) 2 is created in the process 2, the WR 2 is converted into an SuQE 4 to an SuQE 6, and CoSs of the SuQE 4 to the SuQE 6 are all 4, the SuQE 4 to the SuQE 6 are stored in an SuQ 4 in the SuQ set 2.

In the foregoing technical solution, an SuQ set on a host side is created based on the process, a QoS capability is supported, and a buffer from a WR on the host side to an I/O device is implemented by using the SuQ.

After storing the SuQE in the SuQ, the host 210 may notify, by using a doorbell, the I/O device 230 to process the SuQE in the SuQ.

The I/O device 230 determines a destination computing device of the SuQE, and stores the SuQE in a corresponding shared send queue (shared send queue, SSQ) set. The shared send queue may also be referred to as an active queue (active queue, AQ).

In some embodiments, an SSQ set created by the I/O device 230 is statically associated with a channel. In other words, a quantity of SSQ sets created by the I/O device 230 is the same as a quantity of channels. Each SSQ set is associated with one channel.

For example, the computing cluster shown in FIG. 1 includes six computing devices in total. Therefore, the computing device 200 (that is, the computing device 116) needs five channels to communicate with the computing device 111 to the computing device 115 respectively. The five channels may be referred to as a channel 1 to a channel 5 respectively. In other words, the computing device 116 communicates with the computing device 111 through the channel 1, the computing device 116 communicates with the computing device 112 through the channel 2, and the computing device 116 communicates with the computing device 113 through the channel 3. The rest can be deduced by analogy. In a static association scenario, the I/O device 230 may create five SSQ sets. The five SSQ sets are associated with the five channels respectively. If the I/O device 230 determines that the destination computing device of the SuQE is the computing device 111, the I/O device 230 may store the SuQE in the SSQ set associated with the channel 1. The I/O device 230 may send, to the computing device 111 through the channel 1, a to-be-processed request in the SSQ set associated with the channel 1. The to-be-processed request in the SSQ may be referred to as a shared send queue element (shared send queue element, SSQE).

In some other embodiments, the SSQ set created by the I/O device 230 is dynamically associated with the channel. In this case, the I/O device 230 may create an SSQ resource poor. The SSQ resource poor includes at least $N_{CoS}$ SSQs. $N_{CoS}$ is a quantity of SuQs included in one SuQ set, and $N_{CoS}$ is a positive integer greater than or equal to 1. After receiving a doorbell notification from the host 210, the I/O device 230 may determine an SSQ resource from the SSQ resource pool, create the SSQ set, and bind the SSQ set to the channel corresponding to the destination computing device of the to-be-processed request.

For example, the embodiment shown in FIG. 3 is a scenario in which the SSQ set is dynamically associated with the channel. As shown in FIG. 3, the I/O device 230 determines that there are a to-be-processed request that needs to be sent to the computing device 111, a to-be-processed request that needs to be sent to the computing device 112, and a to-be-processed request that needs to be sent to the computing device 115. In this case, the I/O device 230 creates an SSQ set 1 and binds the SSQ set 1 to the channel 1, creates an SSQ set 2 and binds the SSQ set 2 to the channel 2, and creates an SSQ set 3 and binds the SSQ set 3 to the channel 5. In this way, the to-be-processed request sent to the computing device 111 may be stored in the SSQ set 1, the to-be-processed request sent to the computing device 112 may be stored in the SSQ set 2, and the to-be-processed request sent to the computing device 115 may be stored in the SSQ set 3.

The SSQ in the SSQ set may be implemented in the following two manners.

Manner 1: The SSQ is implemented by using a ring buffer (ring buffer).

If the SSQ is implemented by using the ring buffer, SSQEs are executed in sequence. For example, it is assumed that storage space allocated to the SSQ can store eight SSQEs in total, which are an SSQE 1 to an SSQE 8 respectively. The SSQE 1 is a 1st SSQE, and the SSQE 2 is a 2nd SSQE. The rest can be deduced by analogy. When the SSQ is implemented by using the ring buffer, the SSQE 1 to the SSQE 8 are sent in sequence. After the SSQE 8 is sent, an SSQE stored in buffer space of the original SSQE 1 continues to be sent. In other words, when the SSQ is implemented by using the ring buffer, after storage space of the 1st SSQE is determined, storage space of an SSQE that needs to be sent subsequently may be determined, and after the last SSQE is processed, a new SSQE stored in the storage space of the 1st SSQE may be processed.

Manner 2: The SSQ is implemented by using a linked list (linked list).

If the SSQ is implemented by using the linked list, each SSQE records information (which may be referred to as link information) about a next SSQE that needs to be processed. It is assumed that storage space allocated to the SSQ can store eight SSQEs in total, which are an SSQE 1 to an SSQE 8 respectively. When the SSQ is implemented by using the linked list, the SSQE 2 may be sent first. If it is determined, based on the link information in the SSQE 2, that a next sent SSQE is the SSQE 6, the SSQE 6 may be sent after the SSQE 2 is sent. If it is determined, based on the link information in the SSQE 6, that a next sent SSQE is the SSQE 1, the SSQE 1 may be sent after the SSQE 6 is sent. The SuQ mentioned above and a PSSQ mentioned below may also be implemented by using the ring buffer (ring buffer) or the linked list (linked list). A specific implementation is the same as the implementation of the SSQ. For brevity, details are not described herein again.

In a scenario in which the SSQ set is statically associated with the channel, a total size of memory occupied by the SSQ in the I/O device 230 is determined based on a quantity of CoSs, a queue depth of the SSQ, a quantity of computing devices in the computing cluster, and a size of the SSQE. The total size of the memory occupied by the SSQ may be calculated based on the following formula.

$$N_{SSQ} = N_{CoS} \times (N_{node} - 1) \times depth_{queue} \times SSQE_{size} \text{ (Formula 1)}$$

$N_{SSQ}$ indicates the total size of the memory occupied by the SSQ in the I/O device 230, $N_{CoS}$ indicates the quantity of CoSs (also equivalent to a quantity of SSQs included in one SSQ set), $N_{node}$ indicates the quantity of computing devices in the computing cluster, $depth_{queue}$ indicates the queue depth of the SSQ (that is, a quantity of SSQEs included in one SSQ), and $SSQE_{size}$ indicates the size of one SSQE. However, in a scenario in which the SSQ set is dynamically managed with the channel, the total size of the memory occupied by the SSQ in the I/O device 230 may be less than $N_{SSQ}$.

If the computing cluster is in a fully mesh structure, a total size of memory occupied by a send queue (send queue, SQ) in the I/O device of each computing device is as follows.

$$N_{SQ} = (N_{node} - 1) \times P \times P \times depth_{queue\_SQ} \times WQE_{size}$$

$N_{SQ}$ indicates a total size of memory occupied by the SQ in the I/O device, $N_{node}$ is the quantity of computing devices in the computing cluster, P indicates a quantity of processes run on each computing device in the cluster (where it is assumed that quantities of processes run on any two computing devices are the same, and the processes can communicate with each other), $depth_{queue\_SQ}$ indicates a queue depth of the SQ (that is, a quantity of WQEs included in one SQ), and $WQE_{size}$ indicates a size of one WQE. The size of the WQE is equivalent to the size of the SSQE or a difference between the size of the WQE and the size of the SSQE is less than a preset value. The preset value may be determined based on a size of storage space of the WQE, or may be determined based on a statistical value of a size of data that needs to be stored in the WQE for a same type service request. Generally, a quantity of processes run on a next computing device is far greater than the quantity of CoSs. Therefore, $N_{SSQ}$ is less than $N_{SQ}$. In this way, when the size of the memory of the I/O device is the same, in comparison with a conventional solution, a larger-scale computing cluster can be supported by using the technical solution in this embodiment of this application. This can improve a scalability (Scalability) capability of RDMA.

Similar to the SuQ set, each SSQ set in FIG. 3 also includes four SSQs. The four SSQs are in one-to-one correspondence with four CoSs. In this case, the I/O device 230 may determine, based on the CoS in the SuQE, to store the SuQE in a corresponding SSQ in the SSQ set.

In some embodiments, if processing time of an SSQE in one SSQ exceeds a preset time threshold (for example, no acknowledgment message sent by the destination computing device is received within the preset time threshold), the SSQE in the SSQ may be stored in a pending shared send queue (pending shared send queue, PSSQ). The pending shared send queue may also be referred to as a pending queue (pending queue, PQ).

In some embodiments, the preset time threshold may be the same as time for waiting for retransmission for the $k^{th}$ time, where k is a positive integer greater than or equal to 1 and less than a maximum quantity of retransmission times. For example, it is assumed that the time for waiting for the retransmission is determined based on the following formula.

$$T_{RTNS} = T_1 \times 2^{\text{Service Timeout}} \text{ (Formula 3)}$$

$T_{RTNS}$ is the time for waiting for the retransmission, $T_1$ is a preset value, Service Timeout is a positive integer greater than or equal to 1, and Service Timeout is a preset maximum quantity of retransmission times. For example, if a value of Service Timeout is 10, the time for waiting for the retransmission for the first time is $T_1 \times 2$, the time for waiting for the retransmission for the second time is $T_1 \times 2^2$. The rest can be deduced by analogy. A value range of $T_1$ is usually at a microsecond level. For example, a typical value may be 4.096 microseconds. Certainly, $T_1$ may alternatively be another value, for example, 5 microseconds or 10 microseconds.

If the preset time threshold is the same as the time for waiting for the first retransmission and the value of $T_1$ is 4.096 microseconds, the preset time threshold is $4.096 \times 2 = 8.192$ microseconds.

In some other embodiments, the preset time threshold may alternatively be set based on experience, for example, may be equal to 10 microseconds, 15 microseconds, 20 microseconds, or the like.

A to-be-processed request (that is, the SSQE stored in the PSSQ) in the PSSQ may also be referred as a pending shared send queue element (pending shared send queue element, PSSQE).

In some embodiments, the I/O device 230 may bind the PSSQ to a channel corresponding to the destination computing device, and send the PSSQE in the PSSQ through the channel. For example, it is assumed that the SSQ 1 in the SSQ set 3 has two SSQEs, which are the SSQE 1 and the SSQE 2 respectively. If processing time of the SSQE 1 and processing time of the SSQE 2 exceed the preset time threshold, the SSQE 1 and the SSQE 2 may be stored in a PSSQ 1 (where the SSQE 1 and the SSQE 2 that are stored in the PSSQ 1 may be referred to as a PSSQE 1 and a PSSQE 2 respectively). The I/O device 230 may bind the PSSQ 1 to the channel 1, and send the PSSQE 1 and the PSSQE 2 through the channel 1.

In some other embodiments, when a preset condition is met, the I/O device 230 may re-store the to-be-processed request in the PSSQ in the SSQ. For example, it is assumed that the SSQ 1 in the SSQ set 3 has two SSQEs, which are the SSQE 1 and the SSQE 2 respectively. If processing time of the SSQE 1 and processing time of the SSQE 2 exceed the preset time threshold, the SSQE 1 and the SSQE 2 may be stored in a PSSQ 1 (where the SSQE 1 and the SSQE 2 that are stored in the PSSQ 1 may be referred to as a PSSQE 1 and a PSSQE 2 respectively). The I/O device 230 may bind the PSSQ 1 to the channel 1, and send the PSSQE 1 and the PSSQE 2 through the channel 1. If the PSSQE 1 is successfully sent to the destination computing device, the I/O device 230 may move the PSSQE 2 back to the SSQ 1.

Because the SSQ is in a first in first out sending mechanism, if there is an SSQE that is not completed for a long time in the SSQ, subsequent SSQEs cannot be sent in time. Some or all SSQEs blocked in the SSQ may be moved to the PSSQ by using the PSSQ. In this way, remaining SSQEs in the SSQ may continue to be sent, or the SSQ may be bound to another channel. This can effectively reduce an occurrence probability of head-of-line blocking (head-of-line blocking).

In this embodiment of this application, the to-be-processed request (that is, the SuQE, the SSQE, the WQE, and the PSSQE) in each queue (that is, the SuQ, the SSQ, and the PSSQ) may use a same data structure, or may use different data structures. This is not limited in this embodiment of this application. If the SuQE, the SSQE, the WQE, and the PSSQE use the same data structure, sizes of the to-be-processed requests that carry same data in different queues may be the same. If the SuQE, the SSQE, the WQE, and the PSSQE use different data structures, sizes of the to-be-processed requests that carry same data in different queues may not be the same.

It may be understood that, in the embodiment shown in FIG. 3, to implement the CoS, each SuQ set and each SSQ set include four queues. If the CoS does not need to be implemented (or it may be considered that a value of the CoS is 1), each SuQ set and each SSQ set may have only one queue.

In addition, both the SSQ and the PSSQ in the foregoing embodiment are stored in a storage of the I/O device. In some other embodiments, the SSQ and/or the PSSQ may alternatively be stored in a storage of the host.

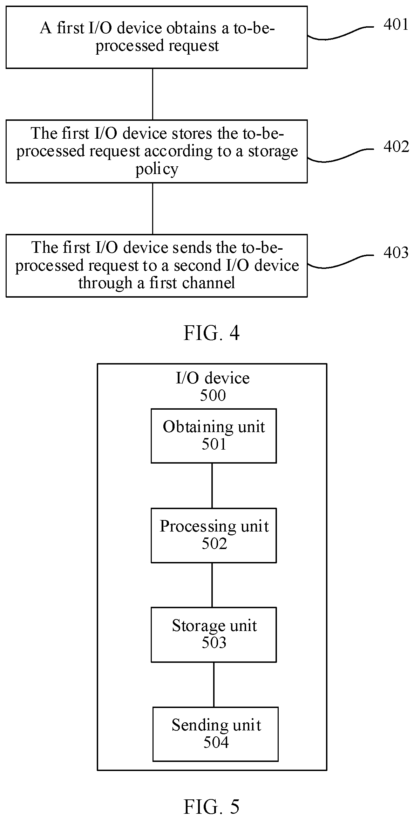

FIG. 4 is a schematic flowchart of a data transmission method according to an embodiment of this application. The method shown in FIG. 4 may be applied to a computing cluster. The computing cluster includes a plurality of computing devices.

401: A first I/O device obtains a to-be-processed request. The first I/O device is an I/O device deployed in a first computing device. The first computing device is any one of the plurality of computing devices.

402: The first I/O device stores the to-be-processed request according to a storage policy. The storage policy indicates a manner of storing the to-be-processed request in the first I/O device.

403: The first I/O device sends the to-be-processed request to a second I/O device through a first channel. The first channel is a transmission channel between the first computing device and a second computing device. The second I/O device is an I/O device deployed in the second computing device. The second computing device is any computing device other than the first computing device in the plurality of computing devices. The first computing device communicates with the second computing device by using a remote direct memory access technology.

In the foregoing technical solution, the first I/O device may determine, according to the storage policy, how to store the to-be-processed request, instead of directly storing the to-be-processed request to storage space of the first I/O device. This can use the storage space of the first I/O device more properly, so that the to-be-processed request that needs to be sent to another computing device in the computing cluster can be stored by using less storage space. In this way, when the storage space of the I/O device remains unchanged, the I/O device using the foregoing technical solution can communicate with more I/O devices, to support a larger-scale computing cluster and improve scalability of RDMA.

The foregoing describes in detail the data transmission method provided in embodiments of this application with reference to FIG. 1 to FIG. 4. The following describes an I/O device provided in embodiments of this application with reference to FIG. 5 to FIG. 6.

FIG. 5 is a schematic structural block diagram of an I/O device according to an embodiment of this application. The I/O device 500 shown in FIG. 5 includes an obtaining unit 501, a processing unit 502, a storage unit 503, and a sending unit 504.

The obtaining unit 501 is configured to obtain a to-be-processed request.

The processing unit 502 is configured to store the to-be-processed request in the storage unit 503 according to a storage policy. The storage policy indicates a manner of storing the to-be-processed request in the storage unit 503.

The sending unit 504 is configured to send the to-be-processed request to another I/O device through a first channel. The first channel is a transmission channel between a first computing device and a second computing device. The I/O device is an I/O device deployed in the first computing device, the another I/O device is an I/O device deployed in the second computing device. The first computing device and the second computing device are any two of a plurality of computing devices included in a computing cluster. The first computing device communicates with the second computing device by using a remote direct memory access technology.

It should be understood that, the I/O device in the present invention and this embodiment of this application may be implemented by using a central processing unit (central processing unit, CPU), or may be implemented by an application-specific integrated circuit (application-specific integrated circuit, ASIC), or may be implemented by a programmable logic device (programmable logic device, PLD). The foregoing PLD may be a complex programmable logical device (complex programmable logical device, CPLD), a field programmable array gate (field-programmable array gate, FPGA), a general array logic (generic array logic, GAL), or any combination thereof. Alternatively, when the data processing method shown in FIG. 3 and FIG. 4 is implemented by software, the I/O device and the modules of the I/O device may be software modules.

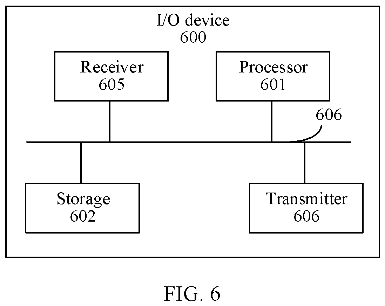

For specific functions and beneficial effects of the obtaining unit 501, the processing unit 502, the storage unit 503, and the sending unit 504, refer to descriptions in the methods shown in FIG. 3 to FIG. 5. For brevity, details are not described herein again. FIG. 6 is a structural block diagram of an I/O device according to an embodiment of this application. An I/O device 600 shown in FIG. 6 includes a processor 601, a storage 602, and a communication interface 603. The processor 601, the storage 602, and the communication interface 603 are connected to each other by using a bus 604. A receiver 605 is configured to receive a to-be-processed request form a host. The transmitter 606 is configured to send a to-be-processed request stored in the storage 602 to another computing device in a computing cluster.

The method disclosed in the foregoing embodiment of the present invention may be applied to the processor 601, or be implemented by the processor 601. The processor 601 may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or may be any conventional processor or the like. In an implementation process, the steps in the foregoing method may be completed by using an integrated logic circuit of hardware in the processor 601, or by using instructions in a form of software. It may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly performed and accomplished by using a hardware decoding processor, or may be performed and accomplished by using a combination of hardware and software modules in the decoding processor. The software module may be located in the storage 602, and the storage 602 may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The processor 601 reads instructions in the storage 602, and completes the steps of the foregoing method in combination with hardware of the processor 601.

The storage 602 may store instructions used to perform the method performed by the I/O device in the foregoing embodiment. The processor 601 may execute the instructions stored in the storage 602 to complete the steps of the I/O device in the foregoing embodiment in combination with another hardware (for example, the receiver 605 and the transmitter 606). A specific working process and beneficial effects may be described in the foregoing embodiment. The storage may be a volatile memory or a non-volatile memory, or may include both the volatile memory and the non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the storage of the systems and methods described in this specification includes but is not limited to these and any storage of another proper type.

The bus 604 may include a power bus, a control bus, a status signal bus, and the like in addition to a data bus. However, for clear descriptions, various types of buses are marked as the bus 604 in the figure.

Embodiments of this application further provide a system on chip, where the system on chip includes a logic circuit. The logic circuit is configured to be coupled to an input/output interface, and transmit data through the input/output interface, to perform the steps performed by the I/O device in the foregoing embodiments.

In an implementation process, the steps in the foregoing method may be completed by using an integrated logic circuit of hardware in the processor, or by using instructions or program code in a form of software. Steps of the method disclosed with reference to embodiments of this application may be directly performed by a hardware processor, or may be performed by using a combination of hardware and software modules in the processor. The software module may be located in a mature storage medium in the conventional technology, such as a random access memory, a flash memory, a read-only memory, a programmable read-only memory, an electrically erasable programmable memory, a register, or the like. The storage medium is located in the storage and a processor reads information in the storage and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be completed by using an integrated logic circuit of hardware in the processor, or by using instructions or program code in a form of software. The general-purpose processor may be a microprocessor, or the processor may be any conventional processor or the like. Steps of the methods disclosed with reference to embodiments of this application may be directly performed and accomplished by using a hardware decoding processor, or may be performed and accomplished by using a combination of hardware and software modules in the decoding processor. The software module may be located in a mature storage medium in the conventional technology, such as a random access memory, a flash memory, a read-only memory, a programmable read-only memory, an electrically erasable programmable memory, a register, or the like. The storage medium is located in the storage, and a processor reads information in the storage and completes the steps in the foregoing methods in combination with hardware of the processor. According to the method provided in embodiments of this application, this application further provides a computing device. The computing device includes the foregoing host and the I/O device.

This application further provides a computing cluster, including a plurality of foregoing computing devices, and each of the plurality of computing devices includes the foregoing I/O device and the foregoing host.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of procedures or functions according to the present invention and embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, wherein the method is applied to a computing cluster, the computing cluster comprises a plurality of computing devices, and the method comprises:

    obtaining, by a first input/output I/O device, a to-be-processed request, wherein the first I/O device is an I/O device deployed in a first computing device, and the first computing device is any one of the plurality of computing devices;
    storing, by the first I/O device, the to-be-processed request according to a storage policy, wherein the storage policy indicates a manner of storing the to-be-processed request in the first I/O device; and
    sending, by the first I/O device, the to-be-processed request to a second I/O device through a first channel, wherein the first channel is a transmission channel between the first computing device and a second computing device, the second I/O device is an I/O device deployed in the second computing device, the second computing device is any computing device other than the first computing device in the plurality of computing devices, and the first computing device communicates with the second computing device by using a remote direct memory access technology.

2. The method according to claim 1, wherein
the storing, by the first I/O device, the to-be-processed request according to a storage policy comprises:

    determining, by the first I/O device, an identifier of a destination computing device of the to-be-processed request; and
    determining, by the first I/O device based on the identifier of the destination computing device, a first shared send queue SSQ that stores the to-be-processed request, wherein the first SSQ is used to store the to-be-processed request associated with the destination computing device.

3. The method according to claim 2, wherein before the determining, by the first I/O device based on the identifier of the destination computing device, a first shared send queue SSQ that stores the to-be-processed request, the method further comprises:

    creating, by the first I/O device, a first SSQ set, wherein the first SSQ set comprises at least one SSQ, and the at least one SSQ comprises the first SSQ; and
    binding, by the first I/O device, the first SSQ set to the first channel, wherein the first SSQ set is used to store the to-be-processed request sent through the first channel.

4. The method according to claim 3, wherein when the first SSQ set comprises a plurality of SSQs, the plurality of SSQs are in one-to-one correspondence with a plurality of class of services CoSs, wherein a CoS corresponding to the first SSQ is the same as a CoS of the to-be-processed request.

5. The method according to any one of claims 2 to 4, wherein when processing time of the to-be-processed request in the first SSQ exceeds a preset threshold, the to-be-processed request in the first SSQ is stored in a pending shared send queue PSSQ.

6. The method according to any one of claims 1 to 5, wherein the obtaining, by a first input/output I/O device, a to-be-processed request comprises:
obtaining, by the first I/O device, the to-be-processed request from a first submission queue, wherein the first submission queue is used to store a to-be-processed request of a process associated with the first submission queue, and the first submission queue is stored in memory of the first computing device.

7. The method according to any one of claims 1 to 6, wherein the I/O device comprises at least one of a network interface controller, a smart network interface controller, a host bus adapter, a host channel adapter, an accelerator, a data processing unit, a graphics processing unit, an artificial intelligence device, and a software defined infrastructure.

8. An input/output I/O device, wherein the I/O device comprises an obtaining unit, a processing unit, a storage unit, and a sending unit, wherein

the obtaining unit is configured to obtain a to-be-processed request;
the processing unit is configured to store the to-be-processed request in the storage unit according to a storage policy, wherein the storage policy indicates a manner of storing the to-be-processed request in the storage unit; and
the sending unit is configured to send the to-be-processed request to another I/O device through a first channel, wherein the first channel is a transmission channel between a first computing device and a second computing device, the I/O device is an I/O device deployed in the first computing device, the another I/O device is an I/O device deployed in the second computing device, the first computing device and the second computing device are any two of a plurality of computing devices comprised in a computing cluster, and the first computing device communicates with the second computing device by using a remote direct memory access technology.

9. The I/O device according to claim 8, wherein the processing unit is specifically configured to: determine an identifier of a destination computing device of the to-be-processed request; and determine, based on the identifier of the destination computing device, a first shared send queue SSQ that stores the to-be-processed request, wherein the first SSQ is used to store the to-be-processed request associated with the destination computing device.

10. The I/O device according to claim 9, wherein the processing unit is further configured to: before determining the first SSQ based on the identifier of the destination computing device, create a first SSQ set, wherein the first SSQ set comprises at least one SSQ, the at least one SSQ comprises the first SSQ; and bind the first SSQ set to the first channel, wherein the first SSQ set is used to store the to-be processed request through the first channel.

11. The I/O device according to claim 10, wherein when the first SSQ set comprises a plurality of SSQs, the plurality of SSQs are in one-to-one correspondence with a plurality of class of services CoSs, wherein a CoS corresponding to the first SSQ is the same as a CoS of the to-be-processed request.

12. The I/O device according to any one of claims 9 to 11, wherein the processing unit is further configured to: when processing time of the to-be-processed request in the first SSQ exceeds a preset threshold, store the to-be-processed request in the first SSQ to a pending shared send queue PSSQ of the storage unit.

13. The I/O device according to any one of claims 8 to 12, wherein the obtaining unit is specifically configured to obtain the to-be-processed request from a first submission queue, wherein the first submission queue is used to store a to-be-processed request of a process associated with the first submission queue, and the first submission queue is stored in memory of the first computing device.

14. The I/O device according to any one of claims 8 to 13, wherein the I/O device comprises at least one of a network interface controller, a smart network interface controller, a host bus adapter, a host channel adapter, an accelerator, a data processing unit, a graphics processing unit, an artificial intelligence device, and a software defined infrastructure.

15. An input/output I/O device, wherein the I/O device comprises a processor, and the processor is configured to: be coupled to a storage, read and execute instructions and/or program code in the storage, and perform the method according to any one of claims 1 to 7.

16. A computer-readable medium, wherein the computer-readable medium stores program code, and when the computer program code is run on a computer, the computer is enabled to perform the method according to any one of claims 1 to 7.

Computing cluster
100

Computing device
111

Computing device
112

Computing device
113

Network 120

Computing device
114

Computing device
115

Computing device
116

FIG. 1

Computing device
200

Host
210

First processor
211

First storage
212

220

I/O device
230

Second
processor
231

Second storage
232

FIG. 2

FIG. 3

A first I/O device obtains a to-be-processed request — 401

The first I/O device stores the to-be-processed request according to a storage policy — 402

The first I/O device sends the to-be-processed request to a second I/O device through a first channel — 403

FIG. 4

I/O device
500

Obtaining unit
501

Processing unit
502

Storage unit
503

Sending unit
504

FIG. 5

I/O device
600

Receiver
605

Processor
601

606

Storage
602

Transmitter
606

FIG. 6

## INTERNATIONAL SEARCH REPORT

| International application No. |
| --- |
| **PCT/CN2022/116822** |

**A. CLASSIFICATION OF SUBJECT MATTER**

G06F 13/14(2006.01)i

According to International Patent Classification (IPC) or to both national classification and IPC

**B. FIELDS SEARCHED**

Minimum documentation searched (classification system followed by classification symbols)

G06F 13/-

Documentation searched other than minimum documentation to the extent that such documents are included in the fields searched

Electronic data base consulted during the international search (name of data base and, where practicable, search terms used)

CNABS; CNTXT; CNKI: 集群, 分布式, RDMA, IO, I/O, 存储, 缓存, 策略, SQ, SUQ, 队列VEN; WOTXT; EPTXT; USTXT; IEEE: cluster?, RDMA, IO, I/O, queue?, SQ, SUQ

**C. DOCUMENTS CONSIDERED TO BE RELEVANT**

| Category* | Citation of document, with indication, where appropriate, of the relevant passages | Relevant to claim No. |
| --- | --- | --- |
| X | CN 111865831 A (HUAWEI TECHNOLOGIES CO., LTD.) 30 October 2020 (2020-10-30) description, paragraphs [0038]-[0062] | 1-16 |
| A | CN 112764893 A (HUAWEI TECHNOLOGIES CO., LTD.) 07 May 2021 (2021-05-07) entire document | 1-16 |
| A | CN 102831018 A (TATA CONSULTANCY SERVICES LIMITED) 19 December 2012 (2012-12-19) entire document | 1-16 |
| A | CN 111277616 A (ZTE CORP. et al.) 12 June 2020 (2020-06-12) entire document | 1-16 |
| A | CN 113360077 A (HUAWEI TECHNOLOGIES CO., LTD.) 07 September 2021 (2021-09-07) entire document | 1-16 |
| A | CN 103999068 A (INTEL CORP.) 20 August 2014 (2014-08-20) entire document | 1-16 |
| A | US 2004049580 A1 (IBM) 11 March 2004 (2004-03-11) entire document | 1-16 |

☑ Further documents are listed in the continuation of Box C. ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 November 2022** | **07 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/116822** |

**C.** **DOCUMENTS CONSIDERED TO BE RELEVANT**

| Category* | Citation of document, with indication, where appropriate, of the relevant passages | Relevant to claim No. |
| --- | --- | --- |
| A | US 2021271536 A1 (INTEL CORP.) 02 September 2021 (2021-09-02)<br>entire document | 1-16 |

Form PCT/ISA/210 (second sheet) (January 2015)

**INTERNATIONAL SEARCH REPORT**
Information on patent family members

International application No.

**PCT/CN2022/116822**

| Patent document cited in search report | | | Publication date (day/month/year) | Patent family member(s) | | | Publication date (day/month/year) |
|---|---|---|---|---|---|---|---|
| CN | 111865831 | A | 30 October 2020 | CN | 111865831 | B | 13 May 2022 |
| CN | 112764893 | A | 07 May 2021 | None | | | |
| CN | 102831018 | A | 19 December 2012 | AU | 2011265444 | A1 | 10 January 2013 |
| | | | | AU | 2016201513 | A1 | 24 March 2016 |
| | | | | CN | 102831018 | B | 24 June 2015 |
| | | | | IN | 201101745 | I3 | 21 December 2012 |
| | | | | IN | 332420 | B | 21 February 2020 |
| | | | | AU | 2011265444 | B2 | 10 December 2015 |
| | | | | AU | 2016201513 | B2 | 05 October 2017 |
| CN | 111277616 | A | 12 June 2020 | None | | | |
| CN | 113360077 | A | 07 September 2021 | None | | | |
| CN | 103999068 | A | 20 August 2014 | US | 2014310369 | A1 | 16 October 2014 |
| | | | | WO | 2013095654 | A1 | 27 June 2013 |
| | | | | DE | 112011106016 | T5 | 11 September 2014 |
| | | | | CN | 103999068 | B | 23 November 2016 |
| | | | | US | 10051038 | B2 | 14 August 2018 |
| US | 2004049580 | A1 | 11 March 2004 | US | 2006259644 | A1 | 16 November 2006 |
| | | | | US | 7912988 | B2 | 22 March 2011 |
| US | 2021271536 | A1 | 02 September 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2021127325